**Europäisches Patentamt**

**European Patent Office**

**Office européen des brevets**

(19)

(11) Veröffentlichungsnummer : **0 403 780 B1**

(12) **EUROPÄISCHE PATENTSCHRIFT**

(45) Veröffentlichungstag der Patentschrift :
**25.11.92 Patentblatt 92/48**

(51) Int. Cl.$^5$ : **A01C 17/00**

(21) Anmeldenummer : **90108985.4**

(22) Anmeldetag : **12.05.90**

(54) Vorrichtung zum Streuen von körnigem Gut, insbesondere Dünger.

(30) Priorität : **20.06.89 DE 3920061**

(43) Veröffentlichungstag der Anmeldung :
**27.12.90 Patentblatt 90/52**

(45) Bekanntmachung des Hinweises auf die
Patenterteilung :
**25.11.92 Patentblatt 92/48**

(84) Benannte Vertragsstaaten :
**DE FR GB**

(56) Entgegenhaltungen :
**WO-A-85/03407**
**WO-A-88/09609**
**FR-A- 2 298 925**
**GB-A- 618 205**
**GB-A- 1 174 056**

(73) Patentinhaber : **RAUCH**
**LANDMASCHINENFABRIK GMBH**
**W-7573 Sinzheim (DE)**

(72) Erfinder : **Rauch, Norbert**
**Bergseestrasse 49**
**W-7573 Sinzheim (DE)**

(74) Vertreter : **Dr.-Ing. Hans Lichti Dipl.-Ing. Heiner**
**Lichti Dipl.-Phys. Dr. Jost Lempert**
**Postfach 41 07 60 Bergwaldstrasse 1**
**W-7500 Karlsruhe 41 (DE)**

EP 0 403 780 B1

**Beschreibung**

Die Erfindung betrifft eine Vorrichtung zum Streuen von körnigem Gut, insbesondere Dünger, mit einem von einem Fahrzeug aufgenommenen Vorratsbehälter mit einer quer zur Fahrtrichtung großen Breite, und je einer Auslauföffnung im Bereich seiner äußeren Enden, wenigstens einem im Vorratsbehälter angeordneten Querförderer und je einem Rührwerk oberhalb jeder Auslauföffnung, das während der Streuarbeit ständig angetrieben ist, und mit je einer unterhalb der Auslauföffnung angeordneten Schleuderscheibe zum Verteilen des Streugutes.

Eine Vorrichtung des vorgenannten Aufbaus ist bekannt (WO 88/09 609). Sie gehört zur Gattung der Schleuderstreuer und hat sich in der Praxis bewährt. Ihre Vorteile liegen insbesondere in der Erzielung großer Streubreiten bei zugleich gutem Streuergebnis (Streubild, Mengenverteilung, Mengentreue etc.), was im wesentlichen auf die weit voneinander entfernten Schleuderscheiben zurückzuführen ist. Dies eröffnet ferner die Möglichkeit des Einsatzes großer Vorratsbehälter, deren Breite über annähernd die gesamte Höhe bis zu der für den Straßenverkehr zulässigen Größe reichen kann, so daß das Fahrzeug, z. B. ein Schlepper, eine größtmögliche Nutzlast mit sich führen kann und die Füllzyklen auf dem Hof oder auf dem Feld länger sind als bei herkömmlichen Schleuderstreuern mit trichterförmigen Behältern.

Zwingende Voraussetzung für solche Schleuderstreuer ist jedoch ein Querförderer, der das Streugut den Auslauföffnungen zuführt, was bei den kleinervolumigen trichterförmigen Behältern herkömmlicher Schleuderstreuer nicht notwendig ist, da hier das Streugut den Auslauföffnungen allein durch Schwerkraft zuläuft.

Die da wie dort notwendigen Rührwerke dienen dazu, den Dünger oberhalb der Auslauföffnungen fließfähig zu halten, während der Querförderer bei den eingangs genannten Streuern nur Förderaufgaben zu erfüllen hat. Indes führt jede in den Dünger eingetragene mechanische Bewegung zu einer unerwünschten Beanspruchung des Düngerkorns, d. h. zu Abrieb oder Zerkleinerung, wodurch das ursprüngliche Kornspektrum verändert wird und die hierauf eingestellten Betriebsdaten des Streuers nicht mehr zutreffen. Die Folge sind abweichende Streubilder, Mengenveränderungen etc.

Bei einem bekannten Streuer anderer Bauart (FR-A-2 298 925), einer Art Kastenstreuer, sind beiderseits der Längsachse des Fahrzeugs sich erstreckende rohrförmige Streubehälter angeordnet, die in ihrem Boden äquidistant angeordnete Auslauföffnungen aufweisen. Oberhalb der Auslauföffnungen jedes Streubehälters läuft eine schieberartige Verteileinrichtung hin und her. Oberhalb der Verteileinrichtung wiederum ist ein Querförderer angeordnet, der den aus einem Vorratsbehälter am inneren Ende der Streubehälter aufgegebenen Dünger zu deren äußeren Enden transportiert und der Verteileinrichtung gleichmäßig zuführen soll. Das Problem bei diesem bekannten Streuer wird unter anderem darin gesehen, die vom Querförderer von innen nach außen transportierte Menge an die von der Verteileinrichtung ausgetragene Menge anzupassen, d. h. stets für eine ausreichende Düngerfüllung oberhalb der Verteileinrichtung zu sorgen. Dies wird dadurch erreicht, daß der Querförderer in Abhängigkeit von dem von ihm erzeugten Gegendruck gesteuert wird. Überschreitet der Gegendruck einen einstellbaren Wert, so wird der Querförderer entweder stillgesetzt oder es wird seine Förderrichtung umgekehrt. Im erstgenannten Fall wird der Querförderer über einen Zeitschalter wieder in Betrieb gesetzt, im zweiten Fall läuft der Querförderer solange gegensinnig, bis sich in dieser Förderrichtung der vorbestimmte Gegendruck einstellt. Hier steht nicht eine schonende Behandlung des Düngers im Vordergrund, sondern ausschließlich die ausreichende Versorgung der Verteileinrichtung, da der einstellbare Zeitschalter keine Rücksicht auf die Bewegung des Düngers und damit auf dessen Beanspruchung nimmt, während bei einer Inversion der Förderrichtung, insbesondere wenn sie mehrfach erfolgt, der Dünger ständig in Bewegung und somit auch ständig beansprucht wird.

Der Erfindung liegt die Aufgabe zugrunde, bei einer Vorrichtung des eingangs genannten Aufbaus (WO 88/09609), die mechanische Beanspruchung des Düngerkorns zu mindern und somit reproduzierbare und qualitativ gute Streuergebnisse zu erzielen und für einen immer ausreichenden Füllstand über den Auslauföffnungen zu sorgen.

Diese Aufgabe wird erfindungsgemäß dadurch gelöst, daß der Querförderer eine Hohlwelle aufweist, in der eine die Rührwerke antreibende Welle angeordnet ist, und daß die Hohlwelle des Querförderers einen in Abhängigkeit von dem Füllstand des Streugutes oberhalb des Querförderers wirksamen Antrieb aufweist, der bei Unterschreiten eines bestimmten Füllstandes zuschaltbar ist.

Während die - wie bei dem bekannten Schleuderstreuer - ständig umlaufenden Rührwerke für eine ausreichende Lockerung des Düngers oberhalb der Auslauföffnung während der Streuarbeit sorgen, nutzt die Erfindung die Tatsache, daß auch bei den sehr breiten Vorratsbehältern des bekannten Streuers der größte Teil des Streugutes den Auslauföffnungen durch Schwerkraft zuläuft, so daß eine Querförderung solange nicht notwendig ist, als dieser Schwerkraftzulauf gegeben ist. Der Schwerkraftzulauf ist zumindest solange gewährleistet, als der Dünger über der Auslauföffnung ansteht. Im Idealfall bildet sich oberhalb der Auslauföffnung in der Düngerfüllung ein Hohlkegel mit einem zum Schüttwinkel korrespondierenden Kegelwinkel und mit stetig zunehmender Kegelhöhe. In der Praxis sehen die Verhältnisse wegen der Fahr- und Neigungsbewegungen anders aus. In jedem Fall ist aber der Schwerkraftzulauf bis zu einer gewissen Füllstandhöhe gewährleistet. Erst wenn diese unterschritten wird und der Düngerzufluß zur Auslauföffnung ins Stocken zu geraten droht, wird erfindungsgemäß der Antrieb des Querförderers zugeschaltet, um ausreichend Dünger oberhalb der Auslauföffnung bereitzustellen. Umgekehrt wird bei Überschreiten des Füllstandes der Antrieb wieder abgeschaltet. Dies kann beim Nachfüllen des Vorratsbehälters der Fall sein, aber auch während der Streuarbeit, wenn beispielsweise durch die Fahr- oder Neigungsbewegungen wieder ausreichend Dünger nachrutscht. Praktische Versuche haben gezeigt, daß für etwa 1/4 des Füllvolumens des Vorratsbehälters die Querförderung in Betrieb gesetzt werden muß.

Damit ist zugleich die Beanspruchung des Düngerkorns durch den Querförderer fast vollständig eliminiert, denn je geringer das auf den Querförderer lastende Düngergewicht ist, um so geringer sind auch die auf das Korn wirkende Kräfte. Es wird insbesondere auch vermieden, daß er während des Umlaufs durch zu große Gewichte dynamisch belastet ist, so daß der konstruktive Aufbau einfacher und leichter ist. Schließlich werden die bei Schüttgütern bekannte "Brücken"-Bildung im Bereich des Querförderers, wie auch ein zu starker Förderdruck nach außen, die gleichfalls zu unerwünschter Kornbeanspruchung aber auch zu Betriebsstörungen in der Förderung führen können, vermieden.

Das erfindungsgemäße Prinzip, insbesondere die füllstandsabhängige Wirksamkeit des Antriebs des Querförderers läßt sich auf vielfältige Weise verwirklichen. Der Füllstand ist zwar die für den Schwerkraftzufluß maßgebliche Meßgröße, jedoch können auch hiermit korrespondierende Meßgrößen, z. B. das Gewicht oberhalb des Querförderers, die Drehmomentaufnahme bei laufendem Antrieb des Querförderers oder auch des Rührwerks herangezogen werden.

Mit dem weiteren Merkmal der Erfindung, daß der Querförderer eine Hohlwelle aufweist, in der eine beide Rührwerke antreibende Welle angeordnet ist, ergibt sich eine kompakte, leichte und platzsparende Bauweise, die insbesondere die Nutzlast nicht beeinträchtigt und ein Minimum an bewegten Teilen des Vorratsbehälters aufweist, was der schonenden Behandlung des Düngers zugute kommt.

Es hat sich gezeigt, daß auch die spezifischen Eigenschaften des Düngers, insbesondere dessen Rieselverhalten, eine wesentliche Rolle bei der mechanischen Beanspruchung des Düngerkorns durch den Querförderer spielen. Ähnliche Einflüsse hat auch die Ausbring- bzw. Streumenge. Es ist deshalb gemäß einem weiteren Ausführungsbeispiel vorgesehen, daß der Antrieb des Querförderers zusätzlich in Abhängigkeit von der Düngersorte und/oder der Ausbringmenge zuschaltbar ist. Bei schlecht rieselfähigem Dünger und/oder großer Streumenge wird der Querförderer später zugeschaltet und früher abgeschaltet als bei gut rieselfähigem Dünger und kleiner Streumenge.

In weiterer Ausgestaltung kann vorgesehen sein, daß jeder Auslauföffnung ein Querförderer zugeordnet ist, und daß der Antrieb jedes Querförderers in Abhängigkeit von dem Füllstand des Streugutes über ihm und/oder der Düngersorte und/oder der Ausbringmenge zuschaltbar ist.

Bei diesem Ausführungsbeispiel ist also jeder Auslauföffnung eine aus Querförderer und Rührwerk bestehende Baueinheit zugeordnet, wobei wiederum nur zwei Antriebe erforderlich sind und die Zuschaltung der Querförderer letztlich über die Drehmomentaufnahme an der Antriebswelle des Querförderers selbsttätig gesteuert wird. Diese Ausführung hat den Vorteil, daß je nach Füllstand über der einen oder der anderen Auslauföffnung nur der eine oder andere Querförderer, jedoch stets beide Rührwerke laufen, die Beanspruchung des Düngerkorns also minimiert wird. Der wesentliche Vorteil liegt jedoch darin, daß die Antriebe wahlweise schaltbar sind, so daß beispielsweise nur einseitig gestreut werden kann. Dies kann bei ungünstiger Geländeform, insbesondere hängigem Gelände, oder beim Grenzstreuen der Fall sein.

Gemäß einer Ausführungsform kann vorgesehen sein, daß der Rührwerkswelle und der Hohlwelle je ein eigener Antrieb zugeordnet ist, wobei der Antrieb für die Hohlwelle füllstandsabhängig schaltbar ist. Diese Ausbildung gibt die Möglichkeit Rührwerk und Querförderer mit verschiedenen Drehzahlen, insbesondere das Rührwerk, wie erwünscht, mit niedrigerer Drehzahl laufen zu lassen.

Statt dessen kann auch vorgesehen sein, daß zwischen der Hohlwelle und der Rührwerkswelle eine in Abhängigkeit vom Füllstand arbeitende Schaltkupplung oder eine Rutschkupplung und für beide Wellen ein einziger Antrieb vorgesehen ist. Die Rutschkupplung wird so eingestellt, daß sie bei einem bestimmten Drehmoment die Antriebsverbindung zur Hohlwelle freigibt. Der Querförderer läuft also solange nicht, wie ein bestimmtes Düngergewicht auf ihn wirkt. Bei Unterschreiten dieses Gewichtes nimmt die Rutschkupplung die Hohlwelle des Querförderers selbsttätig mit. Eine Schaltkupplung empfiehlt sich dann, wenn eine externe Meßgröße, wie der Füllstand selbst, zur Steuerung herangezogen wird.

Bei Zuordnung je eines Querförderers zu jeder Auslauföffnung kann vorgesehen sein, daß deren Antriebswellen über eine Rutschkupplung mit dem Antrieb verbunden sind.

Zweckmäßigerweise sind die Antriebe als Hydromotoren ausgebildet, die sich durch kleine und leichte Bauweise sowie durch einfache Steuerbarkeit auszeichnen. So ist es beispielsweise möglich, daß der als Hydromotor ausgebildete Antrieb für den Querförderer über ein Druckbegrenzungsventil in der Hydraulikversorgung zu- und abgeschaltet wird. Wird, wie vorzugsweise vorgesehen, ein einstellbares Druckbegrenzungsventil vorgesehen, so läßt sich die Zu- und Abschaltung des Antriebs nicht nur in Abhängigkeit vom Füllstand, sondern auch von der Düngersorte und/oder der Streumenge variieren. Beispielsweise wird man für einen schlecht rieselfähigen Dünger und/oder für große Ausbringmengen einen höheren Druck einstellen, so daß der Querförderer früher zugeschaltet und später abgeschaltet wird. Umgekehrt wird man bei gut fließendem Dünger und kleiner Streumenge vorgehen.

Es kann weiterhin vorgesehen sein, daß die Hydromotoren für die Rührwerke und den Querförderer in Reihe geschaltet sind. Eine unterschiedliche Drehzahl läßt sich in diesem Fall durch Druckregelventile verwirklichen.

Eine zweckmäßige Ausbildung ergibt sich dann, wenn der Hydromotor für die Rührwerke unmittelbar auf der Rührwerkswelle sitzt, während die Hohlwelle des Querförderers von dem Hydromotor über einen Kettentrieb angetrieben ist, wobei beide Hydromotoren oder nur einer drehzahlsteuerbar sein können.

Ausgehend von der bekannten Vorrichtung mit einem Vorratsbehälter, dessen unterhalb des Querförderers befindlicher muldenförmiger Boden abnehmbar ist und der in den Seitenwänden Lager für die Rührwerkswellen aufweist, ist weiterhin vorgesehen, daß die Lager horizontal geteilt sind, die Seitenwände eine vom Lager ausgehende, nach unten offen auslaufende Aussparung aufweisen und zumindest die untere Hälfte der Lager zusammen mit der Rührwerkswelle, den Rührwerken, dem Querförderer und dem Antrieb nach unten ausbaubar bzw. von unten einbaubar sind.

Mit der vorgenannten Ausführungsform ist eine baukastenartige Montage und ferner ein leichter Ausbau, beispielsweise für Reparatur- oder Inspektionszwecke möglich.

Zur Stabilisierung kann weiterhin vorgesehen sein, daß im mittleren Bereich des Vorratsbehälters wenigstens ein geteiltes Stützlager für den Querförderer und zwischen dessen Hohlwelle und der Rührwerkswelle ein weiteres Lager angeordnet ist.

Eine von der bekannten Vorrichtung abweichende Ausführung zeichnet sich dadurch aus, daß der Vorratsbehälter in seinem mittleren Bereich dachförmig nach oben eingezogen ist und daß unterhalb des dachförmigen Teils zumindest der Antrieb für den Querförderer angeordnet ist.

Durch diese Ausbildung ist einerseits der Anteil des Düngers, der allein durch Schwerkraft den Auslauföffnungen zufließt, größer, andererseits lassen sich der Querförderer bzw. dessen Antriebswelle und die der Rührwerke günstiger und stabiler lagern.

So kann beispielsweise vorgesehen sein, daß die Hohlwelle des Querförderers und die Rührwerkswelle unter dem dachförmigen Teil des Vorratsbehälters durchlaufen und in den den dachförmigen Teil begrenzenden Seitenwänden in horizontal geteilten Lagern sitzen, von denen wiederum nach unten offene Aussparungen in diesen Seitenwänden ausgehen, so daß die Wellen an beiden Außenseiten und im mittleren Bereich zweimal abgestützt sind.

Wie schon angedeutet, ist es von Vorteil, wenn die Rührwerke, der Querförderer, deren Wellen und der oder die Antriebe eine getrennt montierbare Baueinheit bilden.

Nachstehend ist die Erfindung anhand von in der Zeichnung wiedergegebenen Ausführungsbeispielen beschrieben. In der Zeichnung zeigen:

Figur 1 eine schematische Ansicht auf die Frontwand einer Ausführungsform der Vorrichtung zum Anbau an einen Schlepper;

Figur 2 eine Draufsicht zu der Darstellung gemäß Figur 1 (um 180 Grad gedreht);

Figur 3 eine vergrößerte Detailansicht der Datstellung gemäß Figur 1 mit Blickrichtung auf die Rückwand;

Figur 4 einen Schnitt IV - IV gemäß Figur 3 und

Figur 5 eine der Figur 1 entsprechende Ansicht einer anderen Ausführungsform.

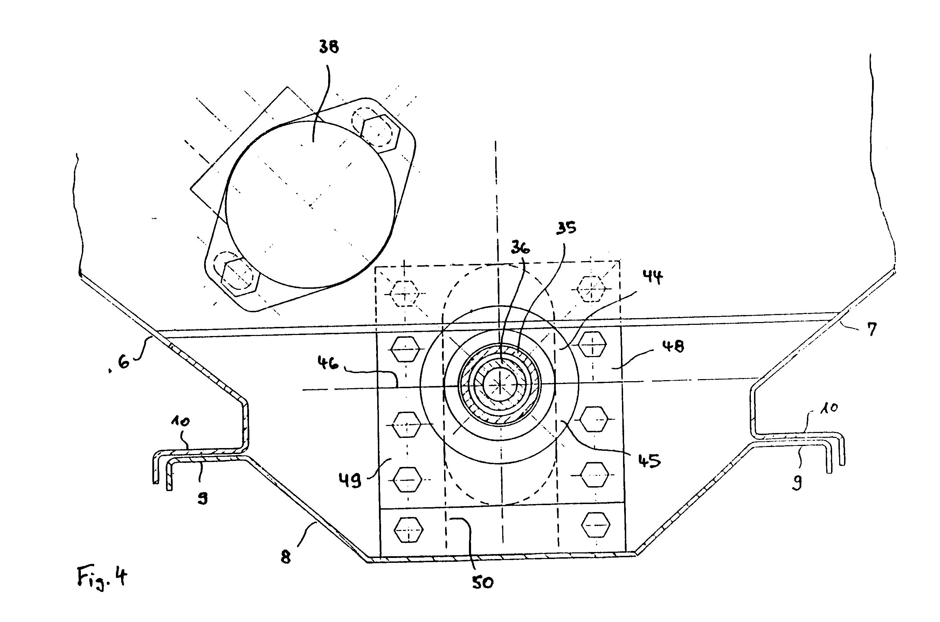

Bei der in der Zeichnung wiedergegebenen Vorrichtung handelt es sich um einen Schleuderstreuer, der vom Dreipunkt-Gestänge eines nicht gezeigten Schleppers aufgenommen wird. Zu diesem Zweck weist der Rahmen 1 des Streuers Anschlüsse 2, 3 und 4 für den Oberlenker und die Unterlenker des Dreipunkt-Gestänges auf. Der Rahmen 1 nimmt einen Behälter 5 für den Dünger auf, der quer zur Fahrtrichtung (Zeichenebene) eine größtmögliche Breite aufweist, um die für den Straßenverkehr zulässige Gesamtbreite voll auszunutzen. Der Behälter 5 ist in seinem oberen Teil rechteckig ausgebildet, während im unteren Teil die Front- und die Rückwand 6, 7 nach innen zu einem muldenförmigen Boden 8 geneigt sind, der über Flansche 9, 10 an der Front- und der Rückwand 6, 7 abnehmbar angebracht ist (Figur 4). Die Seitenwände 11 weisen im mittleren Bereich geneigte Abschnitte 12 und - nach unten anschließend - vertikale Abschnitte 13 auf.

Im mittleren Bereich ist der Behälter 5 unter Bildung eines Tunnels 14 dachförmig nach oben eingezogen und weist geneigte Wandabschnitte 15 und - nach unten anschließend - vertikale Wandabschnitte 16 auf, die zu den Seitenwandabschnitten 13 parallel verlaufen.

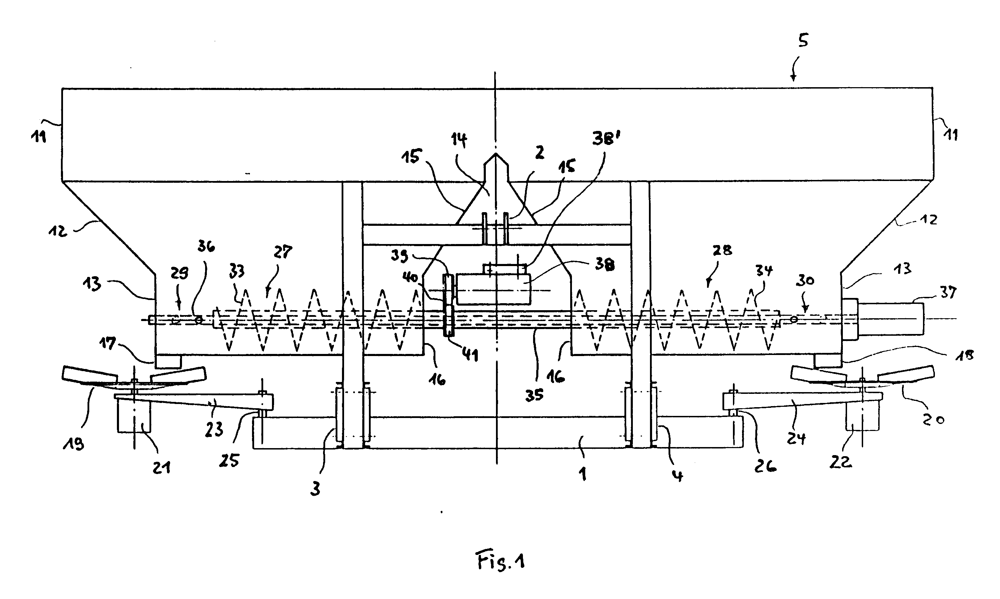

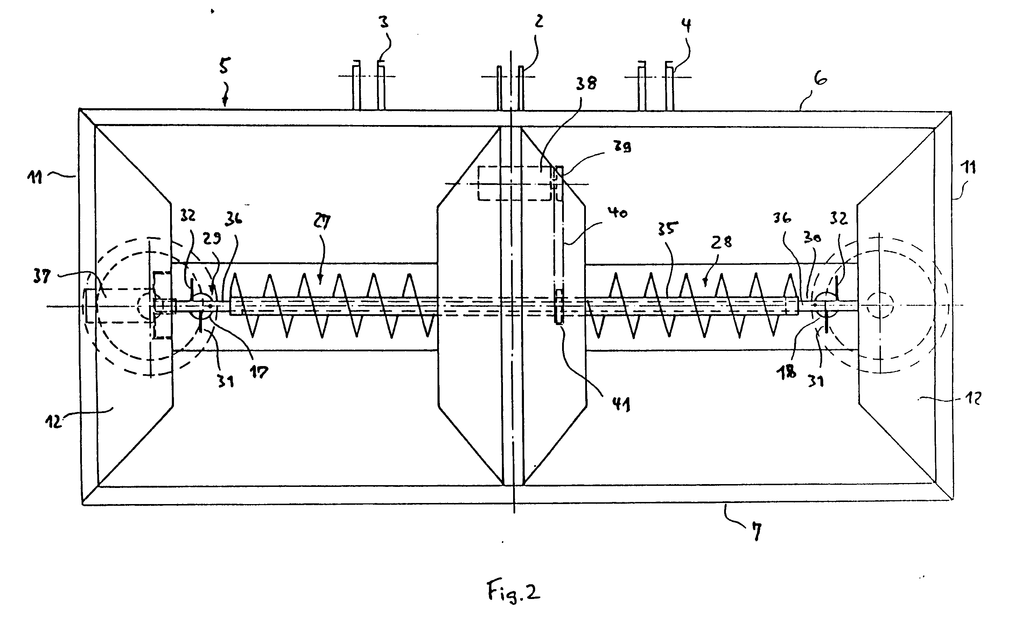

An seinen äußeren Enden besitzt der Behälter 5 in seinem Boden 8 Auslauföffnungen 17, 18. Unterhalb jeder Auslauföffnung 17, 18 ist eine Schleuderscheibe 19, 20, die jeweils von einem drehzahlsteuerbaren Hydromotor 21, 22 angetrieben ist, angeordnet. Die Schleuderscheiben 19, 20 mit ihren Hydromotoren 21, 22 sitzen jeweils auf einem Tragarm 23, 24, der über einen senkrechten Lagerzapfen 25, 26 am Rahmen 1 schwenkbar gelagert ist, so daß die Schleuderscheiben 19, 20 aus der in Figur 1 und 2 wiedergegebenen Betriebsstellung in eine Lage verschwenkbar sind, in der der Dünger aus den Auslauföffnungen 17, 18 ungehindert nach unten auslaufen kann.

Im Behälter 5 ist innerhalb des muldenförmigen Bodens 8 zu beiden Seiten der Längsmittelachse des Behälters je ein Querförderer 27, 28, der sich von den inneren senkrechten Wandabschnitten 16 bis in den Bereich der Auslauföffnungen 17, 18 erstreckt, und oberhalb letzterer je ein Rührwerk 29, 30 angeordnet. Die Rührwerke 29, 30 bestehen im einfachsten Fall aus Rührfingern 31, 32 (Figur 2), die - wie die Querförderer 27, 28 - um eine horizontale Achse umlaufen.

Bei dem in den Figuren 1 bis 4 gezeigten Ausführungsbeispiel weisen die Querförderer 27, 28 als Förderorgane eine Schraubenwendel 33, 34 auf, die auf einer durchgehenden Hohlwelle 35 sitzen. Die Rührwerke 29, 30 sitzen auf einer Antriebswelle 36, die durch die Hohlwelle hindurchgeführt ist und diese nach beiden Seiten überragt und dort die Rührfinger 31, 32 aufweist.

Die Rührwerke 29, 30 bzw. ihre Welle 36 werden von einem Hydromotor 37 angetrieben, der an einer Seite des Behälters 5 außerhalb desselben angeflanscht ist. Die Hohlwelle 35 der Querförderer 27, 28 wird von einem weiteren Hydromotor 38 angetrieben, der im Tunnel 14 angeordnet ist und abtriebseitig über ein Kettenrad 39 und eine Kette 40 mit einem Kettenrad 41 auf der Hohlwelle 35 verbunden ist. Dem Hydromotor 38, der mit dem Hydromotor 37 für die Rührwerke 29, 30 in Reihe geschaltet sein kann, ist ein Druckbegrenzungsventil 38′ vorgeschaltet, der an leicht zugänglicher Stelle angebracht, z. B. am Hydromotor angeflanscht ist.

Das Druckbegrenzungsventil 38′ sorgt dafür, daß bei zu hoher Drehmomentaufnahme an den Querförderern 27, 28 bzw. der Hohlwelle 35 der Hydromotor 38 stehen bleibt und die Förderung aussetzt. Die Drehmomentaufnahme wird von dem oberhalb der Querförderer 27, 28 vorhandenen Düngermenge und damit vom Füllstand bestimmt. Unterschreitet der Füllstand ein bestimmtes Niveau, so läuft der Hydromotor 38 an und setzt die Querförderer 27, 28 in Drehbewegung, um die Zufuhr des Düngers zu den Auslauföffnungen 17, 18 sicherzustellen. Der Hydromotor 38 steht also über einen wesentlichen Zeitraum der Streuarbeit still und läuft erst dann an, wenn der Dünger innerhalb des Behälters 5 zur Neige geht. Die Rührwerke 29, 30 hingegen sind von dem Hydromotor 37 ständig angetrieben, so daß eine stete Lockerung des Düngers oberhalb der Auslauföffnungen 17, 18 gewährleistet ist.

Das Druckbegrenzungsventil 38′ ist einstellbar, um die Zuschaltung des Hydromotors auch an die Rieselfähigkeit des Düngers und gegebenenfalls an die Ausbringmenge (freier Querschnitt der Auslauföffnungen) anpassen zu können.

Die Antriebswelle 36 der Rührwerke 29, 30 ist einerseits in den senkrechten Seitenwandabschnitten 13 des Behälters 5, andererseits im mittleren Bereich über eine Büchse 42 in der Hohlwelle 35 abgestützt. Ähnliche Büchsen können im Bereich der Enden der Hohlwelle zwischen dieser und der Antriebswelle 36 für die Rührwerke 29, 30 angeordnet sein. Die Hohlwelle 35 wiederum ist in den den Tunnel 14 seitlich begrenzenden, senkrechten Wandabschnitten 16 in Lagern 43 geführt. Die Lager 43 sind in einer Horizontalebene 46 geteilt und bestehen aus einer oberen Lagerschale 44 und einer unteren Lagerschale 45. Die Lagerschalen 44, 45 sitzen jeweils in oder sind ein Teil von Flanschplatten 48, 49, die mit den Wandabschnitten 16 verschraubt werden können. Ferner weisen die Wandabschnitte 16 nach unten offene Aussparungen auf, so daß nach Abnehmen des Bodens 9 und Lösen der unteren Flanschplatte 49 zumindest die untere Lagerschale nach unten ausgebaut werden kann.

In den senkrechten Abschnitten 13 der Seitenwände ist die Ausbildung der Lager in gleicher Weise getroffen. Die Hohlwelle 35, die Antriebswelle 36, deren Hydromotor 37 sowie der Hydromotor 38 mit dem Kettentrieb 39, 40 und 41 sind als Baueinheit ausgeführt, so daß nach Abnehmen des Bodens 8 und Lösen der Flanschplatten 49 die gesamte Baueinheit mit Querförderern 27, 28 und Rührwerken 29, 30 problemlos nach unten ausgebaut und auch wieder eingebaut werden kann.

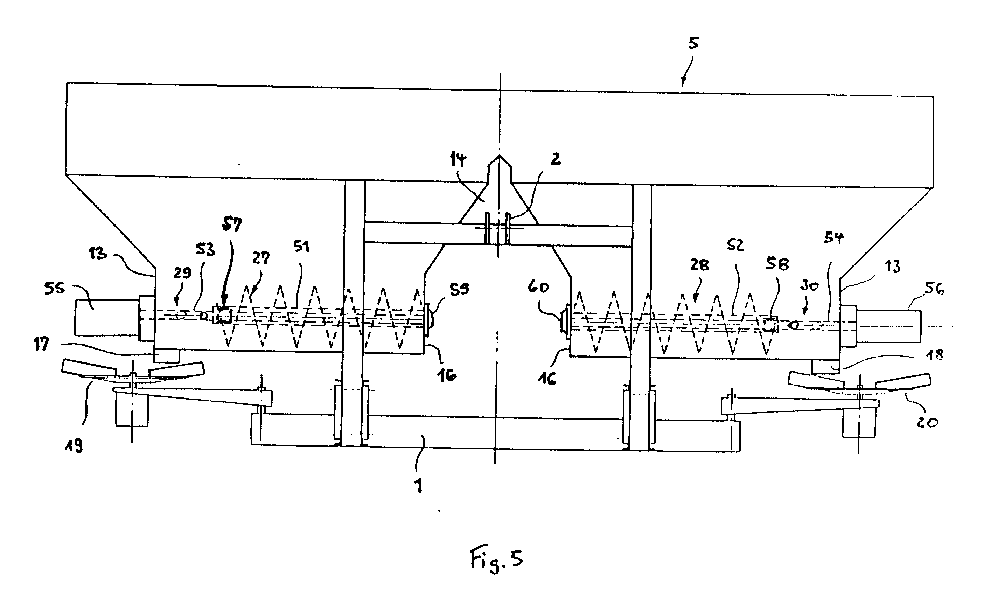

Bei dem Ausführungsbeispiel gemäß Figur 5 sitzen die Querförderer 27, 28 jeweils auf getrennten Hohlwellen 51, 52, in denen - gleichfalls getrennt - die Antriebswellen 53, 54 für die Rührwerke 29, 30 sitzen. Den Antriebswellen 53, 54 der Rührwerke 29, 30 ist je ein Hydromotor 55, 56 zugeordnet, die beide außerhalb des Behälters 5 im Bereich der senkrechten Seitenwandabschnitte 13 angeflanscht sind. Die Antriebswellen 53, 54 stehen über eine oder mehrere Rutschkupplungen 57, 58, von denen in Figur 5 jeweils eine schematisch angedeutet ist, mit den Hohlwellen 51, 52 in kraftschlüssiger Verbindung. Die Hohlwellen 51, 52 sitzen weiterhin in Lagern 59, 60 in den senkrechten Wandabschnitten 16 des Tunnels 14.

Während bei der Streuarbeit die Rührwerke 29, 30 mittels der Hydromotoren 55, 56 ständig angetrieben sind, nimmt die Rutschkupplung 57, 58 die Hohlwelle 51, 52 mit dem Querförderer 27, 28 nur dann mit, wenn die Drehmomentaufnahme am Querförderer, d. h. das auf ihm lastende Düngergewicht nicht zu groß ist. Fällt der Füllstand unter ein bestimmtes Niveau, stellt die Rutschkupplung 57, 58 eine kraftschlüssige Verbindung zwischen der Antriebswelle 53, 54 und der Hohlwelle 51, 52 her, so daß der Querförderer mitläuft und den Dünger vor allem vom inneren Bereich des Behälters nach außen fördert.

Die Ausführungsform gemäß Figur 5 hat den Vorteil, daß bei ungleichmäßigem Füllungsgrad in der linken oder der rechten Hälfte des Behälters 5 eine individuelle Ansteuerung der Querförderer 27, 28 möglich ist. Es läuft nämlich nur der Querförderer mit, oberhalb dessen der Füllstand unter das vorbestimmte Niveau gefallen ist. Mit dieser Ausführung kann ferner einer Düngerverlagerung, beispielsweise bei hängigem Gelände Rechnung getragen werden, indem dann nur der oben liegende Querförderer angesteuert wird. Schließlich ist es möglich, die Hydromotoren 55, 56 getrennt zu schalten, um beispielsweise nur einseitig zu streuen, was wiederum bei hängigem Gelände, insbesondere aber beim Grenzstreuen erwünscht ist.

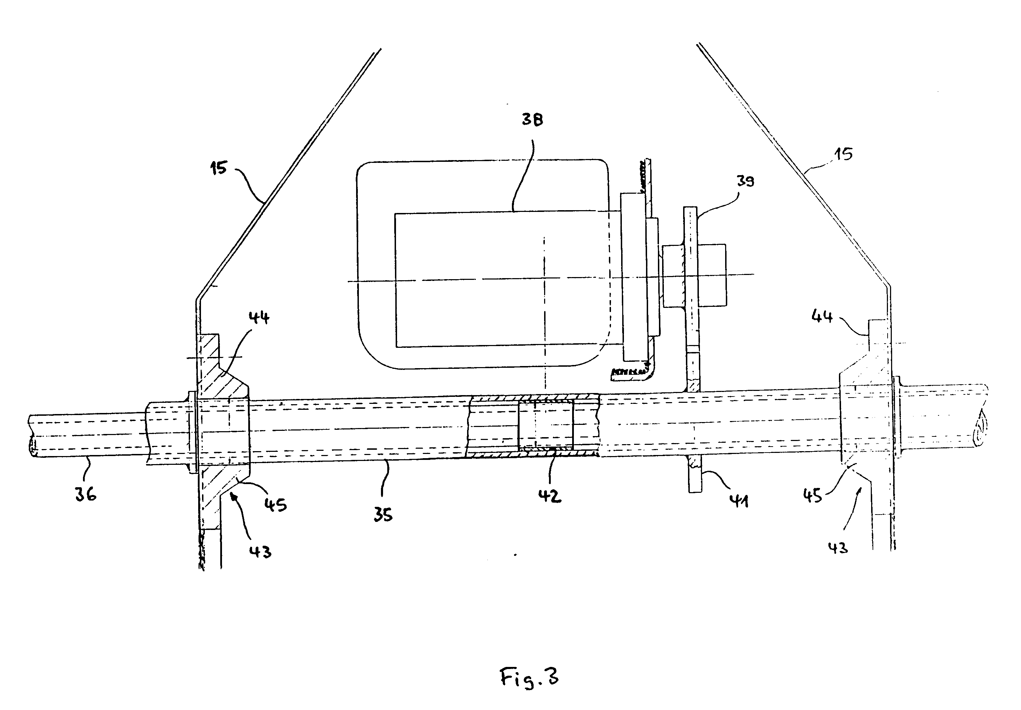

Die Ausbildung der Lager 59, 60 in den senkrechten Wandabschnitten 16 sowie der entsprechenden Lager in den Seitenwandabschnitten 13, die in der Zeichnung nicht näher dargestellt sind, ist vorteilhafterweise die gleiche, wie sie mit Bezug auf die Figuren 3 und 4 beschrieben worden ist, so daß sich auch hier jede aus dem Querförderer 27 und dem Rührwerk 29 bzw. dem Querförderer 28 und dem Rührwerk 30 bestehende Baueinheit problemlos ein- und ausbauen läßt.

## Patentansprüche

1. Vorrichtung zum Streuen von körnigem Gut, insbesondere Dünger, mit einem von einem Fahrzeug aufgenommenen Vorratsbehälter (5) mit einer quer zur Fahrtrichtung großen Breite, und je einer Auslauföffnung (17,18) im Bereich seiner äußeren Enden, wenigstens einem im Vorratsbehälter angeordneten Querförderer (27,28) und je einem Rührwerk (29,30) oberhalb jeder Auslauföffnung, das während der Streuarbeit ständig angetrieben ist, und mit je einer unterhalb der Auslauföffnungen angeordneten Schleuderscheibe (19,20) zum Verteilen des Streugutes, dadurch gekennzeichnet, daß der Querförderer (27,28) eine Hohlwelle (35) aufweist, in der eine die Rührwerke (29,30) antreibende Welle (36) angeordnet ist, und daß die Hohlwelle (35) des Querförderers (27,28) einen in Abhängigkeit von dem Füllstand des Streugutes oberhalb des Querförderers wirksamen Antrieb (38,55 bis 58) aufweist, der bei Unterschreiten eines bestimmten Füllstandes zuschaltbar ist.

2. Vorrichtung nach Anspruch 1, dadurch gekennzeichnet, daß der Antrieb (38,55 bis 58) des Querförderers zusätzlich in Abhängigkeit von der Düngersorte und/oder der Ausbringmenge zuschaltbar ist.

3. Vorrichtung nach Anspruch 1 oder 2, dadurch gekennzeichnet, daß jeder Auslauföffnung (17,18) ein Querförderer (27,28) zugeordnet ist, und daß der Antrieb jedes Querförderers in Abhängigkeit von dem Füllstand des Streugutes über ihm und/oder der Düngersorte und/oder der Ausbringmenge zuschaltbar ist.

4. Vorrichtung nach einem der Ansprüche 1 bis 3, dadurch gekennzeichnet, daß der Rührwerkswelle (36) und der Hohlwelle (35) je ein eigener Antrieb (37,38) zugeordnet ist.

5. Vorrichtung nach einem der Ansprüche 1 bis 3, dadurch gekennzeichnet, daß zwischen der Hohlwelle (35) und der Rührwerkswelle (36) eine in Abhängigkeit vom Füllstand arbeitende Schaltkupplung oder eine Rutschkupplung und für beide Wellen ein einziger Antrieb vorgesehen ist.

6. Vorrichtung nach einem der Ansprüche 1 bis 3, dadurch gekennzeichnet, daß bei Zuordnung je eines Querförderers (27,28) zu jeder Auslauföffnung (17,18) deren Antriebswellen (51,52) über eine Rutschkupplung (57,58) mit dem Antrieb der Rührwerkswellen (53,54) verbunden sind.

7. Vorrichtung nach einem der Ansprüche 1 bis 5, dadurch gekennzeichnet, daß der Antrieb (38) für den Querförderer (27,28) bzw. die Schaltkupplung über einen Füllstandsmelder im Vorratsbehälter (5) steuerbar sind.

8. Vorrichtung nach einem der Ansprüche 1 bis 5, dadurch gekennzeichnet, daß der Antrieb (38) für den Querförderer (27,28) bzw. die Schaltkupplung in Abhängigkeit von der Drehmomentaufnahme am Querförderer steuerbar sind.

9. Vorrichtung nach einem der Ansprüche 1 bis 8, dadurch gekennzeichnet, daß der Antrieb (38) bzw. die Antriebe (37,38,55,56) als Hydromotoren ausgebildet sind.

10. Vorrichtung nach Anspruch 7, dadurch gekennzeichnet, daß der als Hydromotor (38) ausgebildete Antrieb für den Querförderer (27,28) über ein Druckbegrenzungsteil (42) in der Hydraulikversorgung zu- und abgeschaltet wird.

11. Vorrichtung nach Anspruch 10, dadurch gekennzeichnet, daß das Druckbegrenzungsventil in Abhängigkeit von Düngersorte und Streumenge einstellbar ist.

12. Vorrichtung nach Anspruch 9 oder 10, dadurch gekennzeichnet, daß die Hydromotoren (37,38) für die Rührwerke (29,30) und den Querförderer (27, 28) in Reihe geschaltet sind.

13. Vorrichtung nach einem der Ansprüche 9 bis 12, dadurch gekennzeichnet, daß der Hydromotor (37) für die Rührwerke (29,30) unmittelbar auf der Rührwerkswelle (36) sitzt, während die Hohlwelle (35) des Querförderers (27,28) von dem Hydromotor (38) über einen Kettentrieb (39,40, 41) angetrieben ist.

14. Vorrichtung nach einem der Ansprüche 1 bis 13, dadurch gekennzeichnet, daß der Antrieb (37 bzw. 55,56) für die Rührwerke (29,30) und/oder den Querförderer drehzahlsteuerbar sind.

15. Vorrichtung nach einem der Ansprüche 1 bis 14, dadurch gekennzeichnet, daß die Rührwerke (29, 30) mit niedrigerer Drehzahl als der Querförderer (27,28) umlaufen.

16. Vorrichtung nach einem der Ansprüche 1 bis 16 mit einem Vorratsbehälter, dessen unterhalb des Querförderers befindicher muldenförmiger Boden abnehmbar ist und der in den Seitenwänden Lager für die Rührwerkswelle aufweist, dadurch gekennzeichnet, daß die Lager (43) horizontal geteilt sind, die Seitenwände (13,16) eine vom Lager (43) ausgehende, nach unten offen auslaufende Aussparung (50) aufweisen und zumindest die untere Hälfte (45) der Lager (43) zusammen mit der Rührwerkswelle (36), den Rührwerken (29,30), dem Querförderer (27,28) und dem Antrieb (37,38) nach unten ausbaubar bzw. von unten einbaubar sind.

17. Vorrichtung nach Anspruch 16, dadurch gekennzeichnet, daß im mittleren Bereich des Vorratsbehälters (5) wenigstens ein geteiltes Stützlager (43) für den Querförderer (27,28) und zwischen dessen Hohlwelle (35) und der Rührwerkswelle (36) ein weiteres Lager (42) angeordnet ist.

18. Vorrichtung nach einem der Ansprüche 1 bis 17, dadurch gekennzeichnet, daß der Vorratsbehälter (5) in seinem mittleren Bereich dachförmig nach oben eingezogen ist und daß unterhalb des dachförmigen Teils zumindest der Antrieb (38) für den Querförderer (27,28) angeordnet ist.

19. Vorrichtung nach Anspruch 18, dadurch gekennzeichnet, daß die Hohlwelle (35) des Querförderers (27,28) und die Rührwerkswelle (36) unter dem dachförmigen Teil des Vorratsbehälters (5) durchlaufen und in den den dachförmigen Teil begrenzenden Seitenwänden (13,16) in horizontal geteilten Stützlagern (43) sitzen, von denen wiederum nach unten offene Aussparungen (50) in diesen Seitenwänden (16) ausgehen.

20. Vorrichtung nach einem der Ansprüche 1 bis 19, dadurch gekennzeichnet, daß die Rührwerke (29, 30), der Querförderer (27,28), deren Welle (35, 36) und der oder die Antriebe (37,38) eine getrennt montierbare Baueinheit bilden.

21. Vorrichtung nach einem der Ansprüche 1 bis 20, dadurch gekennzeichnet, daß das einstellbare Druckbegrenzungsventil (38′) an leicht zugänglicher Stelle angeordnet, beispielsweise am Hydromotor (38) angeflanscht ist.

**Claims**

1. Implement for broadcasting granular material, particularly fertilizer, with a hopper (5) carried by a vehicle and having a large width transverse to the direction of travel and in each case on discharge opening (17, 18) in the vicinity of its outer ends, at least one transverse conveyor (27, 28) located in the hopper and in each case one agitator (29, 30) above each discharge opening, which is continuously driven during the broadcasting and with in each case one centrifugal disk (19, 20) for distributing the broadcasting material located below the discharge openings, characterized in that the transverse conveyor (27, 28) has a hollow shaft (35), in which is located a shaft driving the agitators (29, 30), and that the hollow shaft (35) of the transverse conveyor (27, 28) has a drive (38, 55 to 58) acting as a function of the filling level of the broadcasting material above the transverse conveyor and which on dropping below a given filling level can be connected in.

2. Implement according to claim 1, characterized in that the transverse conveyor drive (38, 55 to 58) can additionally be engaged as a function of the fertilizer type and/or the discharge quantity.

3. Implement according to claims 1 or 2, characterized in that with each discharge opening (17, 18) is associated a transverse conveyor (27, 28) and that the drive of each transverse conveyor can be engaged as a function of the filling level of the broadcasting material above it and/or the fertilizer type and/or the discharge quantity.

4. Implement according to one of the claims 1 to 3, characterized in that the agitator shaft (36) and the hollow shaft (35) has in each case its own drive (37, 38) associated with it.

5. Implement according to one of the claims 1 to 3, characterized in that between the hollow shaft (35) and the agitator shaft (36) is provided a clutch or a slip clutch operating as a function of the filling level and for both shafts a single drive is provided.

6. Implement according to one of the claims 1 to 3, characterized in that when associating in each case one transverse conveyor (27, 28) with each discharge opening (17, 18), their driving shafts (51, 52) are connected by means of a slip clutch (57, 58) to the drive of the agitator shafts (53, 54).

7. Implement according to one of the claims 1 to 5, characterized in that the drive (38) for the transverse conveyor (27, 28) or the clutch are controllable by means of a filling level indicator in the hopper (5).

8. Implement according to one of the claims 1 to 5, characterized in that the drive (38) for the transverse conveyor (27, 28) or the clutch are controllable as a function of the torque pickup on the transverse conveyor.

9. Implement according to one of the claims 1 to 8, characterized in that the drive (38) or the drives (37, 38, 55, 56) are constructed as hydraulic motors.

10. Implement according to claim 7, characterized in that the drive, constructed as a hydraulic motor (38), for the transverse conveyor (27, 28) can be connected and disconnected with respect to the hydraulic supply by means of a pressure limiting part (42).

11. Implement according to claim 10, characterized in that the pressure limiting valve can be adjusted as a function of the fertilizer type and broadcast quantity.

12. Implement according to claims 9 or 10, characterized in that the hydraulic motors (37, 38) for the agitators (29, 30) and the transverse conveyor (27, 28) are connected in series.

13. Implement according to one of the claims 9 to 12, characterized in that the hydraulic motor (37) for the agitators (29, 30) is located directly on the agitator shaft (36), whereas the hollow shaft (35) of the transverse conveyor (27, 28) is driven by the hydraulic motor (38) by means of a chain drive (39, 40, 41).

14. Implement according to one of the claims 1 to 13, characterized in that the drive (37 or 55, 56) for the agitators (29, 30) and/or the transverse conveyor are speed-controllable.

15. Implement according to one of the claims 1 to 14, characterized in that the agitators (29, 30) rotate at a lower speed than the transverse conveyor (27, 28).

16. Implement according to one of the claims 1 to 6 with a hopper, whose trough-shaped bottom located below the transverse conveyor is removable and has in the side walls bearings for the agitator shaft, characterized in that the bearings (43) are horizontally split, the side walls (13) have a recess (50) passing out in downwardly open manner and emanating from the bearing (43) and at least the lower half (45) of the bearing (43), together with the agitator shaft (36), the agitators (29, 30), the transverse conveyor (27, 28) and the drive (37, 38) can be dismantled or installed from below.

17. Implement according to claim 16, characterized in that in the central area of the hopper (5) is provided at least one split step bearing (43) for the transverse conveyor (27, 28) and a further bearing (42) is provided between its hollow shaft (35) and the agitator shaft (36).

18. Implement according to one of the claims 1 to 17, characterized in that the hopper (5) is drawn in upwards in roof-shaped manner in its central area and that below the roof-shaped part is provided at least the drive (38) for the transverse conveyor (27, 28).

19. Implement according to claim 18, characterized in that the hollow shaft (35) of the transverse conveyor (27, 28) and the agitator shaft (36) pass below the roof-shaped part of the hopper (5) and are located in horizontally split step bearings (43) in the side walls (13, 16) bounding the roof-shaped part and from which once again emanate downwardly open recesses (50) in said side walls (16).

20. Implement according to one of the claims 1 to 19, characterized in that the agitators (29, 30), the transverse conveyor (27, 28), its shaft (35, 36) and the drive or drives (37, 38) from a separately fittable standard unit.

21. Implement according to one of the claims 1 to 20, characterized in that the adjustable pressure limiting valve (38′) is located at an easily accessible point and is e.g. flanged to the hydraulic motor (38).

**Revendications**

1. Dispositif pour épandre un produit en grains, spécialement un engrais, avec un réservoir de stockage (5) supporté par un véhicule et présentant une grande largeur dans la direction transversale par rapport à la direction de roulage et présentant chaque fois une ouverture d'évacuation (17,18) dans la zone de ses extrémités extérieures, au moins un transporteur transversal (27,28), disposé dans le réservoir de stockage, et chaque fois un agitateur (29,10) situé au-dessus de chaque ouverture d'évacuation et entraîné en permanence pendant le travail de dispersion et avec chaque fois un disque d'éjection (19,20), disposé au-dessous des ouvertures d'évacuation, en vue de distribuer le produit à disperser, caractérisé en ce que le transporteur transversal (27,28) présente un arbre creux (35), dans lequel est disposé un arbre (36) assurant l'entraînement des agitateurs (29,30), et en ce que l'arbre creux (35) du transporteur transversal (27,28) présente un entraînement (38, 55 à 58) agissant en fonction du niveau de remplissage du produit à disperser et susceptible d'être mis en service au-dessous d'un niveau de remplissage déterminé.

2. Dispositif selon la revendication 1, caractérisé en ce que l'entraînement (38,55 à 58) du transporteur transversal est susceptible d'être mis également en service en fonction du type d'engrais et/ou de la quantité à distribuer.

3. Dispositif selon la revendication 1 ou 2, caractérisé en ce qu'à chaque ouverture d'évacuation (17,18) est associé un transporteur transversal (27,28) et en ce que l'entraînement de chaque transporteur transversal est susceptible d'être mis en service en fonction du niveau de remplissage du produit au-dessus de celui-ci et/ou du type d'engrais et/ou de la quantité à distribuer.

4. Dispositif selon l'une des revendications 1 à 3, caractérisé en ce qu'un entraînement propre est chaque fois associé à l'arbre d'agitateur (36) et à l'arbre creux (35).

5. Dispositif selon l'une des revendications 1 à 3, caractérisé en ce qu'il est prévu un embrayage d'accouplement ou un embrayage à friction, travaillant en fonction du niveau de remplissage, entre l'arbre creux (35) et l'arbre d'agitateur (36), et un entraînement unique pour les deux arbres.

6. Dispositif selon l'une des revendications 1 à 3, caractérisé en ce que, dans le cas d'association de chaque transporteur transversal (27,28) à chaque ouverture d'évacuation (17,18), leurs arbres d'entraînement (51,52) sont reliés à l'entraînement des arbres d'agitateur (53,54) par l'intermédiaire d'un embrayage à friction (57,58).

7. Dispositif selon l'une des revendications 1 à 5, caractérisé en ce que l'entraînement (38) destiné au transporteur transversal (27,28) respectivement l'embrayage d'accouplement sont susceptibles d'être commandés par l'intermédiaire d'un indicateur de niveau de remplissage monté dans le réservoir de stockage.

8. Dispositif selon l'une des revendications 1 à 5, caractérisé en ce que l'entraînement (38) du transporteur transversal (27,28), respectivement l'embrayage d'accouplement, sont susceptibles d'être commandée en fonction du couple résistant sur le transporteur transversal.

9. Dispositif selon l'une des revendications 1 à 8, caractérisé en ce que l'entraînement (38), respectivement les entraînements (37,38,55,56), sont réalisés sous forme de moteurs hydrauliques.

10. Dispositif selon la revendication 7, caractérisé en ce que l'entraînement, réalisé sous forme de moteur hydraulique (38), pour le transporteur transversal (27,28), est mis en et hors service par l'intermédiaire d'un élément de limitation de pression (42) placé dans l'alimentation hydraulique.

11. Dispositif selon la revendication 10, caractérisé en ce que la soupape de limitation de pression est réglable en fonction du type d'engrais et de la quantité à disperser.

12. Dispositif selon la revendication 9 ou 10, caractérisé en ce que les moteurs hydrauliques (37,38) destinés aux agitateurs (29,30) et le transporteur transversal (27,28) sont montés en série.

13. Dispositif selon l'une des revendications 3 à 12, caractérisé en ce que le moteur hydraulique (37) destiné aux agitateurs (29,30) est placé directement sur l'arbre d'agitateur (36), tandis que l'arbre creux (35) du transporteur transversal (27,28) est entraîné par le moteur hydraulique (38), par l'intermédiaire d'une transmission à chaîne (39,40,41).

14. Dispositif selon l'une des revendications 1 à 13, caractérisé en ce que la vitesse de rotation de l'entraînement (37 respectivement 55,56) destiné aux agitateurs (29,30) et/ou aux transporteur transversal est susceptible d'être commandée.

15. Dispositif selon l'une des revendications 1 à 14, caractérisé en ce que les agitateurs (29,30) tournent à une vitesse de rotation inférieure à celle du transporteur transversal (27,28).

16. Dispositif selon l'une des revendications 1 à 15, avec un réservoir de stockage, dont le fond en forme d'auge, se trouvant au-dessous du transporteur transversal, est amovible et qui présente dans les parois latérales des paliers pour l'arbre d'agitateur, caractérisé en ce que les paliers (43) sont divisés horizontalement, les parois latérales (13,16) présentent un évidement (50), qui part du palier (43) et s'étend, ouvert vers le bas, et au moins la moitié inférieure (45) des paliers (43) est susceptible d'être démontée par le bas, respectivement montée par le bas, conjointement avec l'arbre d'agitateur (36), les agitateurs (29,30), le transporteur transversal (27,28) et l'entraînement (37,38).

17. Dispositif selon la revendication 16, caractérisé en ce que, dans la zone médiane du réservoir de stockage (5) est disposé au moins un palier d'appui (43) divisé, pour le transporteur transversal (27,28) et, entre son arbre creux (35) et l'arbre d'agitateur (36) est disposé un autre palier (42).

18. Dispositif selon l'une des revendications 1 à 17, caractérisé en ce que le réservoir de stockage (5) est renfoncé dans sa zone médiane, en forme de toit allant vers le haut, et en ce qu'au-dessous de la partie en forme de toit est disposé au moins l'entraînement (38) destiné au transporteur transversal (27,28).

19. Dispositif selon la revendication 18, caractérisé en ce que l'arbre creux (35) du transporteur transversal (27,28) et l'arbre d'agitateur (36) passent sous la partie en forme de toit du réservoir de stockage (5) et reposent, dans les parois latérales, délimitant la partie en forme de toit, dans des paliers d'appui divisés (43), dont de nouveau des évidements (50) ouverts vers le bas, partent dans ces parois latérales (16).

20. Dispositif selon l'une des revendications 1 à 19, caractérisé en ce que les agitateurs (29,30), le transporteur transversal (27,28), son arbre (35,36) et le ou les entraînements (37,38) forment un ensemble de construction montable séparément.

21. Dispositif selon l'une des revendications 1 à 20, caractérisé en ce que la soupape de limitation de pression (38′) réglable est disposée en un endroit facilement accessible, par exemple bridée sur le moteur hydraulique (38).

Fig.1

Fig.2

Fig. 3

Fig. 4

Fig. 5